# EUROPEAN PATENT APPLICATION

(11) **EP 1 351 114 A2**
(43) Date of publication of application: **08.10.2003**
(21) Application number: 02255345.7
(22) Date of filing: 31.07.2002
(51) Int. Cl.: G06F 1/16

(54) **Portable computer**

(30) Priority: 31.01.2002 KR 2002005681; 13.04.2002 KR 2002020267
(71) Applicant: Samsung Electronics Co., Ltd., Suwon-city, Kyungki-do (KR)
(72) Inventor: Park, Bum-su, Kumchon-ku, Seoul City (KR)
(74) Representative: Derry, Paul Stefan

(57) **Abstract**

A portable computer 1 comprises a main body 10; an LCD assembly 50 hinged to the main body; and a latch apparatus 60 for allowing the LCD assembly to be locked to and released from the main body. The latch apparatus 60 includes a support hook part 61 provided in the LCD assembly 50, a movable hook part 62 provided in the main body 10 and moveable between a locking position in which the movable hook part is hooked to the support hook part, and a release position in which the movable hook part is released from the support hook part , and a knob push button part 66. A projection part 69a extends from the push button part 66 and moves the movable hook part 62 to the release position by cooperating with a through hole 64 of the movable hook part 62. The main body 10 and the LCD assembly 50 are provided with a spring to bias them apart. One-handed opening of the portable computer 1 is possible.

## Description

First and second aspects of the present invention relate to a portable computer comprising a main body; a display assembly hinged to the main body; and a latch apparatus arranged to allow the display assembly to be locked to and released from the main body. A third aspect of the invention relates to a portable computer comprising a main body having a first surface, the first surface having first and second areas; the first area including controls for controlling the reproduction of sound by the portable computer, and an display assembly hinged to the main body and rotatable between a closed position and an open position.

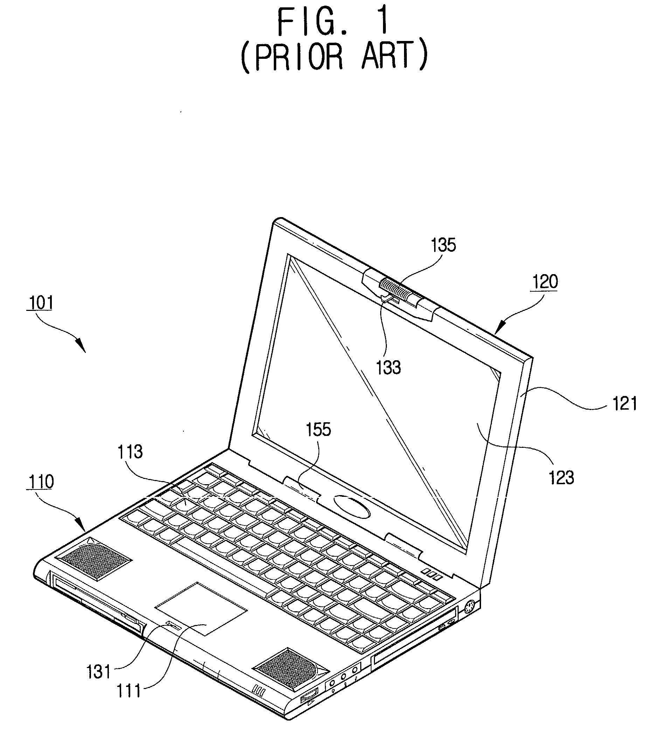

A conventional portable computer 101 is shown in Figure 1. Referring to Figure 1, the portable computer 101 comprises a main body 110; an LCD (liquid crystal display) assembly 120 rotatably attached to the main body 110 by a hinge member 155; and a latch apparatus 131, 133, 135, provided in the main body 110 and in the LCD assembly 120. The latch apparatus 131, 133, 135 locks/releases the LCD assembly 120 against/from the main body 110.

A main board (not shown) is mounted inside the main body 110 and provided with a CPU (central processing unit), a RAM (random access memory), and other conventional operational parts. A keyboard 113 and a touch pad 111 employed as an input unit are provided on the main body 110.

The LCD assembly 120 includes an LCD casing 121, an LCD panel 123 accommodated in the LCD casing 121, and a backlight unit (not shown). The LCD panel 123 receives a video signal from the main body 110 and displays a picture. The backlight unit transmits plane light to the LCD panel 123 and illuminates the picture displayed on the LCD panel 123 to be shown to a user.

The latch apparatus includes a latch hole 131 provided on a front edge part of the main body 110 and a latch member 133 provided at a free end of the LCD assembly 120. The latch member 133 is locked to and released from the latch hole 131 to respectively close and open the portable computer 101. A knob 135 moves the latch member 133 between locking and releasing positions.

In the conventional portable computer 101, in order to open the LCD assembly 120 from the main body 110, the knob 135 is moved from the locking position to the releasing position so as to release the latch member 133 from the latch hole 131, and then the LCD assembly 120 is upwardly rotated away from the main body 110 around the hinge member 155.

Because the knob 135 must be moved from the locking position to the releasing position in order to release the latch member 133 from the latch hole 131, the latch apparatus of the portable computer 101 requires two movements to operate, which is inconvenient.

Further, in the latch apparatus of the portable computer 101, it can be impossible to operate the latch apparatus with one hand. That is, the knob 135 must be moved by one hand from the locking position to the releasing position while the main body is held by the other hand so as to release the latch member 133 from the latch hole 131 in order to rotate the LCD assembly 120 away from the main body 110.

An aim of the present invention is to provide a portable computer having a latch apparatus which is convenient to operate.

Another aim of the present invention is to provide a portable computer which is adapted to be opened with one hand.

Additional aims and advantages of the invention will be appreciated by those skilled in the art.

According to a first aspect of the invention, the portable computer apparatus is characterised in that the latch apparatus includes a support latch part provided on the display assembly, a movable latch part provided with the main body and moveable between a locking position at which the movable latch part is latched to the support latch part and a release position at which the movable latch part is released from the support latch part, and a push button part having a projection arranged to force the movable latch part to move to the release position when the push button is depressed.

According to a second aspect of the invention, the portable computer apparatus is characterised in that it is provided with an opening unit arranged to apply a force to move the display assembly away from the main body when the display assembly is released therefrom.

According to a third aspect of the invention, the portable computer apparatus is characterised in that there is the display assembly arranged such as to cover the second area but not the first area when the display assembly is in closed position.

The above and other aims of the present invention may be accomplished by the provision of a portable computer comprising a main body; an LCD assembly rotatably combined to the main body; and a latch apparatus which allows the LCD assembly to be locked to and released from the main body. The latch apparatus may comprise a support hook part provided in the LCD assembly, a movable hook part provided in the main body and which moves between a locking position at which the movable hook part is hooked to the support hook part and a releasing position at which the movable hook part is released from the support hook part. A knob part having a push button part exposed outside of the main body and a projection part extended from the push button part may move the movable hook part to the releasing position by cooperating with a through hole of the movable hook part.

The support hook part may comprise a pair of fixed hooks at a free end of the LCD assembly, wherein the fixed hooks are spaced apart at a predetermined distance.

A pair of hook through holes may be formed on the main body, in which case each fixed hook may pass through a respective one of the hook through holes, and the movable hook part is positioned adjacent the hook through holes.

The movable hook part may be formed with an inclined part which guides the fixed hook.

A guiding part may be provided at one side of the projection part of the knob part, to guide the movable hook part by contacting with a contact part formed in the through hole of the movable hook part according to an operation of the knob part.

The portable computer may further comprise an elastic member having a first end supported by the main body and a second end coupled to the movable hook part, to restore the movable hook part from the releasing position to the locking position.

The portable computer may further comprise an LCD opening unit provided between the main body and the LCD assembly and which elastically opens the LCD assembly from the main body where the support hook part is released from the movable hook part according to an operation of the knob part.

In a first embodiment, the LCD opening unit comprises a flat spring having first and second ends each fastened to the main body, and a middle part upwardly curved and selectively contacted with the LCD assembly.

In a second embodiment, the LCD opening unit comprises a compression spring having first and second ends coupled to the main body and the LCD assembly, respectively.

In a third embodiment, the LCD opening unit comprises a first supporting part coupled to the main body; a second supporting part coupled to the LCD assembly; a hinge shaft which rotationally couples the first supporting part and the second supporting part; and a torsion spring surrounding the hinge shaft, the torsion spring having first and second ends each suspended on the first and second supporting parts. The hinge shaft may be forcibly fitted to the first supporting part and the second supporting part adapted to rotate with respect to the hinge shaft or the hinge shaft may forcibly fitted to the second supporting part and the first supporting part adapted so that the hinge shaft rotates with respect to first supporting part.

The third embodiment of the LCD opening unit may further comprise a stopper provided in the first supporting part, and suspending one end of the torsion spring, and a suspending member removably combined to the second supporting part, and suspending the other end of the torsion spring.

In a fourth embodiment, the LCD opening unit comprises a first supporting part coupled to the main body; a second supporting part coupled to the LCD assembly; a rotation supporting part having a hinge shaft extended from the first supporting part toward the second supporting part, and a hinge shaft accommodating part provided at the second supporting part and accommodating the hinge shaft; and a neck part which connects the first supporting part and the hinge shaft, the neck part being deformed and restored as the LCD assembly is locked to and released from the main body, respectively.

In the fourth embodiment of the LCD opening unit, the first supporting part may be provided with a stopper which restricts a rotation angle of the hinge shaft, and the neck part may be provided with a contact part which contacts the stopper to restrict a rotation angle of the hinge shaft.

The first and second supporting parts may be each screw-coupled with the main body and the LCD assembly, respectively.

The present invention also provides a portable computer comprising a main body; an LCD assembly rotatably combined to the main body; a latch apparatus which allows the LCD assembly to be locked to and released from the main body; an LCD opening unit which elastically rotates the LCD assembly away from the main body where the LCD assembly is released from the main body. The LCD opening unit comprises a first supporting part coupled to the main body; a second supporting part coupled to the LCD assembly; a rotation supporting part having a hinge shaft extended from the first supporting part toward the second supporting part, and a hinge shaft accommodating part provided at the second supporting part and accommodating the hinge shaft; and a neck part which connects the first supporting part and the hinge shaft, the neck part being deformed and restored as the LCD assembly is locked to and released from the main body, respectively.

The invention will now be described, by way of example only, with reference to the accompanying drawings, in which:
Figure 1 is a perspective view of a conventional portable computer;
Figure 2 is a perspective view of a portable computer according to the present invention;
Figure 3 is an exploded perspective view of the portable computer of Figure 2;
Figure 4 is an exploded perspective view illustrating a latch apparatus and a front cover of the portable computer of Figure 2;
Figure 5 is a perspective view showing the latch apparatus of Figure 4 in a locked position;
Figure 6 is a perspective view showing the latch apparatus of Figure 4 in an open position;
Figure 7 is an alternative view of the latch apparatus of Figure 4 in a locked position;
Figure 8 is a view showing the latch apparatus of Figure 4 in transition from the locked position to an open position;
Figure 9 is a view showing the latch apparatus of Figure 4 in the open position;
Figures 10 and 11 are views showing the latch apparatus of Figure 4 in transition from the open position to the locked position;
Figure 12 is a view showing the latch apparatus of Figure 4 in the locked position;
Figure 13 is an exploded perspective view of second and third embodiments of the portable computer according to the present invention;
Figure 14 is an enlarged view of a portion of the second embodiment of the portable computer;
Figure 15 is an exploded perspective view of an LCD opening unit of the second embodiment of the portable computer;
Figure 16A is an assembled perspective view showing the LCD opening unit of Figure 15 in the open position;
Figure 16B is an assembled perspective view showing the LCD opening unit of Figure 15, in the closed position;
Figure 17 is an exploded perspective view of the LCD opening unit of the third embodiment of the portable computer;
Figure 18A is an assembled perspective view showing the LCD opening unit of Figure 17 in an open position;
Figure 18B is an assembled perspective view showing the LCD opening unit of Figure 17 in a position immediately before closing or immediately after opening;
Figure 19A is a perspective view of a portable computer according to a fourth embodiment of the present invention;
Figure 19B is an enlarged perspective view of a portion of the portable computer shown in Figure 19A; and
Figure 20 is a perspective view of a portable computer according to a fifth embodiment of the present invention.
In the drawings, like reference numerals refer to like elements throughout.

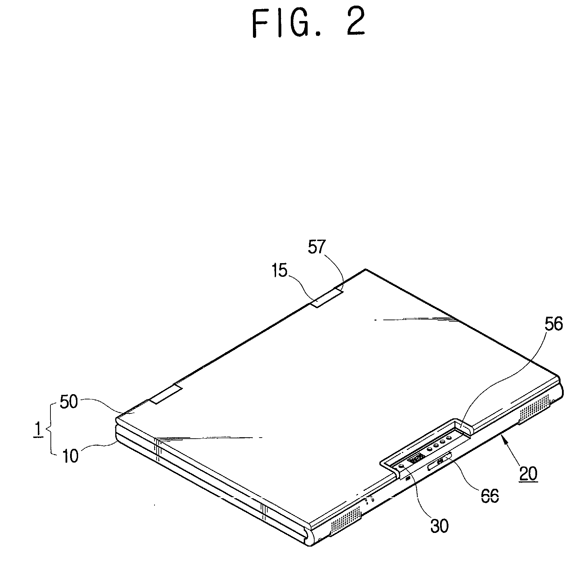

Referring to Figures. 2 to 12, a portable computer 1, according to a first embodiment of the present invention, comprises generally a main body 10 which outputs a video signal, and an LCD assembly 50, which displays the video signal received from the main body 10. The LCD assembly 50 has a free end 50a and is rotatably connected to the main body 10 at a hinged end 50b of the LCD assembly.

The main body 10 comprises a main board (not shown) mounted inside the main body 10. The main board is provided with a CPU (central processing unit), a RAM (random access memory), and other conventional components of a portable computer. An input unit comprising a keyboard 13 and a touch pad 11 are provided on the main body 10. A rear part of the main body 10 is provided with a pair of hinge parts 15, which co-operate with hinge pins 16 to rotatably connect the main body 10 to the LCD assembly 50. A front portion of the main body 10 is covered by a front cover 20. The front cover 20 is secured to the front of the main body 10 using fasteners, such as for example, screws 26.

The hinge parts 15 each have an annular hollow structure. They are provided in rear opposite sides of the main body 10, making a pair., The hinge parts 15 protrude upwardly from a surface of the main body 10. Each hinge part 15 accommodates a hinge pin 16 within its annulus. Each hinge pin 16 is inserted into a corresponding hinge pin holder 57 of the LCD assembly 20, thereby allowing the LCD assembly 20 to rotate with respect to the main body 10, the front part 50a being able to rotate away from the front of main body 10.

The front cover 20 which is preferably made of a plastic material, is in the shape of elongate bar. The front cover 20 is fastened to the front of the main body 10 with the screws 26, thereby covering the front of the main body 10. An inside wall 21 of the front cover 20 is provided with a movable hook holding part (latch hook receptacle) 62 which is a part of a latch apparatus 60 described in more detail below. On an upper surface 22, the front cover 20 is provided a pair of hook through-holes 23 in register with a pair of fixed hooks 61 of the latch apparatus 60, so as to allow the fixed hooks 61 to pass through the hook through holes 23 as the front cover 20 meets the free end 50a of the LCD assembly 50. The fixed hooks 61 are mounted on the free end 50a of the LCD assembly 50. A plurality of holes 25 are provided in a front part 24 of the front cover 20 through which a knob part 66 (further described below) connects with the front cover 20. The knob part 66 is exposed to be accessible from outside the portable computer 1 when the LCD assembly 50 is closed onto the main body 10.

An audio part 30 is provided on a front centre edge of the main body 10. The audio part 30 is exposed to the outside of the portable computer 1 through a cutaway 56 formed in a front centre edge of the LCD assembly 50 when the LCD assembly 50 is locked onto the main body 10 by the latch apparatus 60.

The audio part 30 comprises an LCD 31 for displaying characters, and a plurality of control buttons 32. Thus, the audio part 30 is controllable to reproduce sound, such as music, by operation of the control buttons 32 exposed through the aperture 56 of the LCD assembly 50 when the LCD assembly 50 is locked onto the main body 10 by the latch apparatus 60.

The LCD assembly 50 includes an LCD casing 51, an LCD panel 53 accommodated in the LCD casing 51, and a backlight unit (not shown) installed in the back of the LCD panel 53. The LCD panel 53 receives a video signal from the main body 10 through an LCD-FPC (flexible PIC concentrator) (not shown) and displays a picture accordingly. The backlight unit transmits plane light to the LCD panel 53 and illuminates the picture displayed on the LCD panel 53 for viewing by a user.

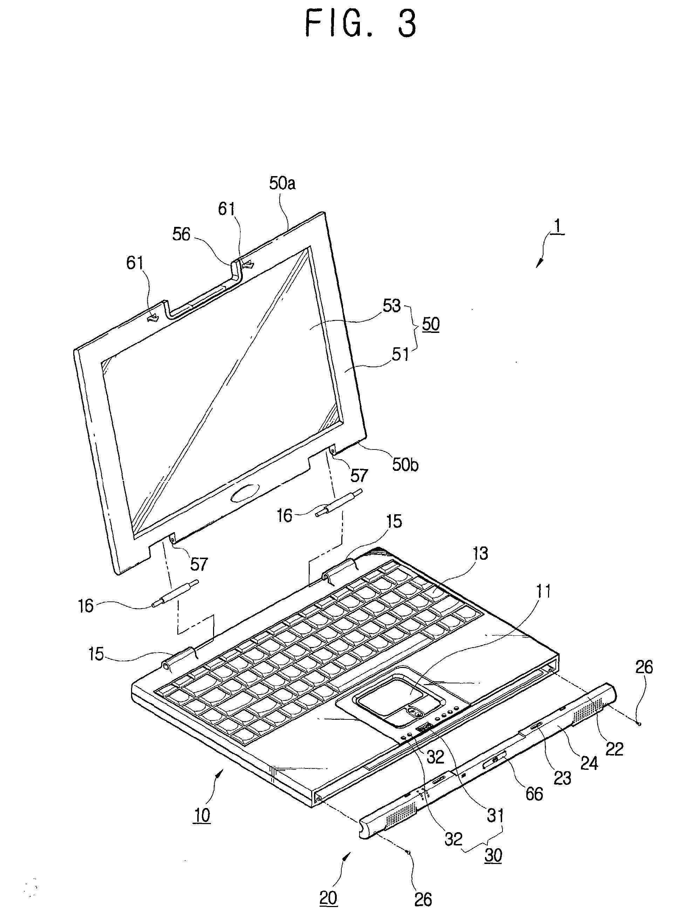

The aperture 56 has a predetermined area so as to expose the whole of the audio part 30, even where the LCD assembly 50 is locked onto the main body 10 by the latch apparatus 60. The hinge pins 16 are inserted into their corresponding hinge pin holder 57. Thus, each hinge pin holder 57 is rotatably connected to each hinge part 15 by the hinge pin 16, thereby allowing the LCD assembly 50 to rotate in relation to the main body 10 as shown in Figures 2 and 3.

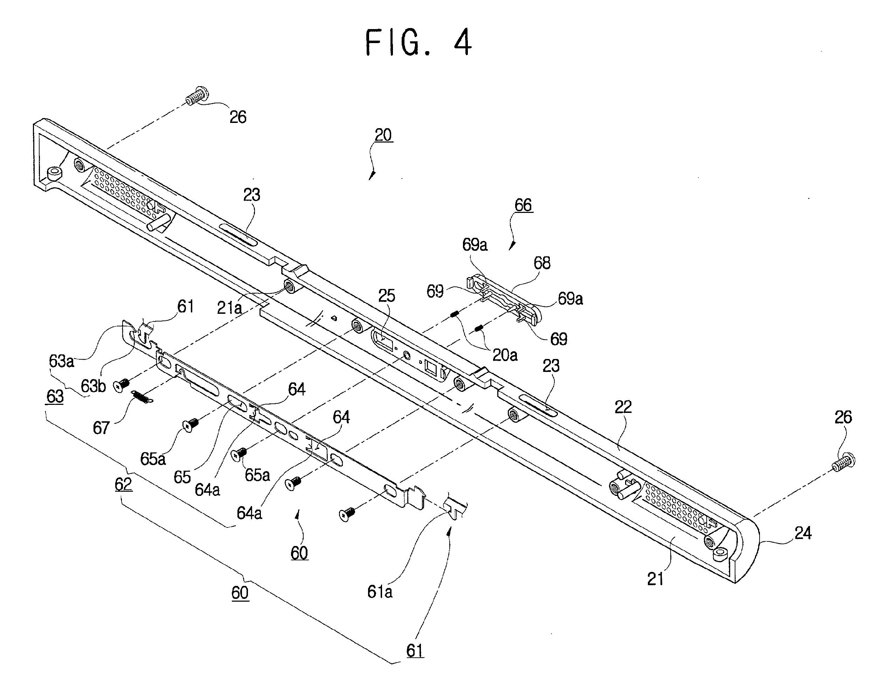

In Figure 4, the latch apparatus 60 is shown comprising the pair of fixed hooks 61. The movable hook part 62 is provided in the front cover 20 of the main body 10, and is movable between a locking position, in which the movable hook part is hooked to the fixed hooks 61, and a release position, in which the movable hook part 62 is released from the fixed hooks 61. Movement of the knob part 66 causes the knob part 66 to move the movable hook part 62 to the release position. The pair of fixed hooks 61 may be collectively referred to as a support hook part.

The fixed hooks 61 protrude one on each side of a central point of the front cover 20 and adjacent to the aperture 56 of the LCD assembly 50. The fixed hooks travel downwards towards the main body 10 as the LCD assembly 50 closes onto the main body 10. Each fixed hook 61 has a hook end 61a. Thus, the fixed hooks 61 can be hooked to the movable hook part 62 after passing through the hook through-holes 23, and can be released from the movable hook part 62 by translation thereof, so as to allow the LCD assembly 50 to be opened away from the main body 10.

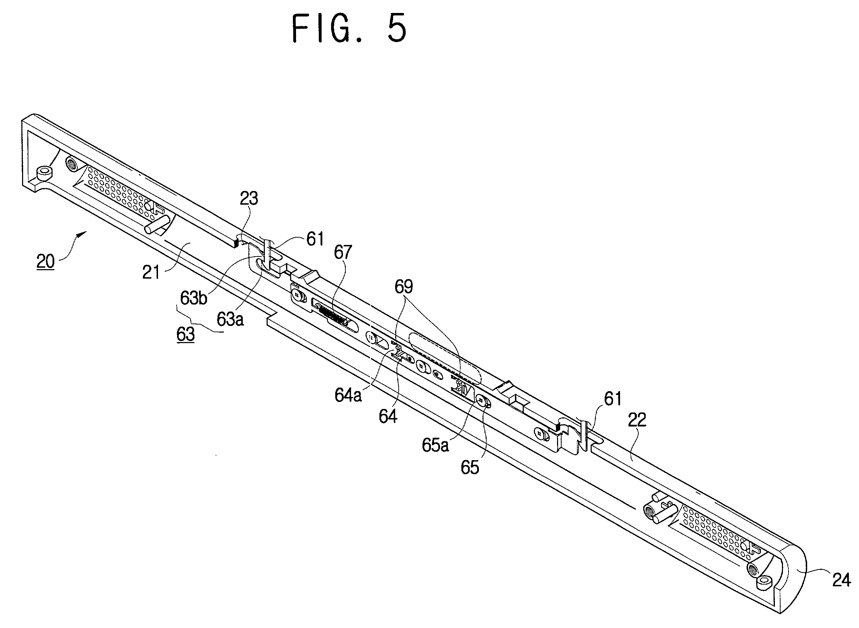

The movable hook part 62 is made of a durable material, such as for example, steel, and, as clearly shown in Figures 4 and 5, includes a movable hook 63 at each end. The hooks 63 are positioned beneath the hook through-holes 23 in register with the fixed hooks 61. The movable hook part 62 has through-holes 64, through which guiding parts 69a of the knob part 66 (further described below) pass, and has a contact parts 64a protruding inwardly in their respective through-hole 64 which contact with the guiding part 69a so as to guide it. Further, the movable hook part 62 comprises a bolt through hole 65 by which the movable hook part 62 is connected to the inside wall 21 of the front cover 20 with a bolt 65a. Preferably the movable hook part 62 has a plurality of bolt through holes 65 through which a plurality of bolts 65a pass to connect the moveable hook part 62 to the front cover 21.

The movable hooks 63 are provided at opposite ends of the movable hook part 62. Each movable hook 63 includes a hook holder 63b which is lockable to and releasable from the hook end 61a of the corresponding fixed hook 61, and an inclined part 63a inclined toward the hook 61a for guiding the corresponding fixed hook 61.

The bolt through holes 65 are formed in the movable hook part 62 to permit movement of the movable hook part 62 in a lengthwise direction of the movable hook part 62 relative to the front part 24, and to restrict movement of the hook part 62 in other directions. The bolts 65a, when inserted into the bolt through holes 65, connect the movable hook part 62 to screw bosses 21a on the inside wall 21 of the front cover 20. The bolt through holes 65 and the bolts 65a allow the movable hook part 62 to move between the releasing position and the locking position.

The knob part 66 is made of a suitable material, such as a plastic material, and comprises a push button part 68 connected to the front cover 20 on the outside thereof. Projection parts 69 extend from the push button part 68 into the through holes 64 of the movable hook part 62. An elastic member 67 is connected between the movable hook part 62 and the front part 24 to return the movable hook part 62 and the knob part 66 to a predetermined position after operation of the latch apparatus.

The push button part 68 is connected to the holes 25 of the front cover 20 and movable in a direction indicated by the arrow A when pressed by a user. Springs 20a aid in returning the push button part 68 to a predetermined position where the push button part 68 is not being pressed. The springs 20a are held captive between the push button part 68 and the front part 24.

Each projection part 69 extends from the push button part 68 into a respective through hole 64 of the movable hook part 62. The guiding parts 69a are provided on rear parts of their respective projection part 69, and guide the movable hook part 62 from the locking position to the release position by contacting with contact parts 64a of the through holes 64 when the push button part 68.

A first end of the elastic member 67 is coupled to the movable hook part 62, and a second end is coupled to the front cover 20 to restore the movable hook part 62 to a predetermined position when a pressing force acting on the push button part 68 is removed.

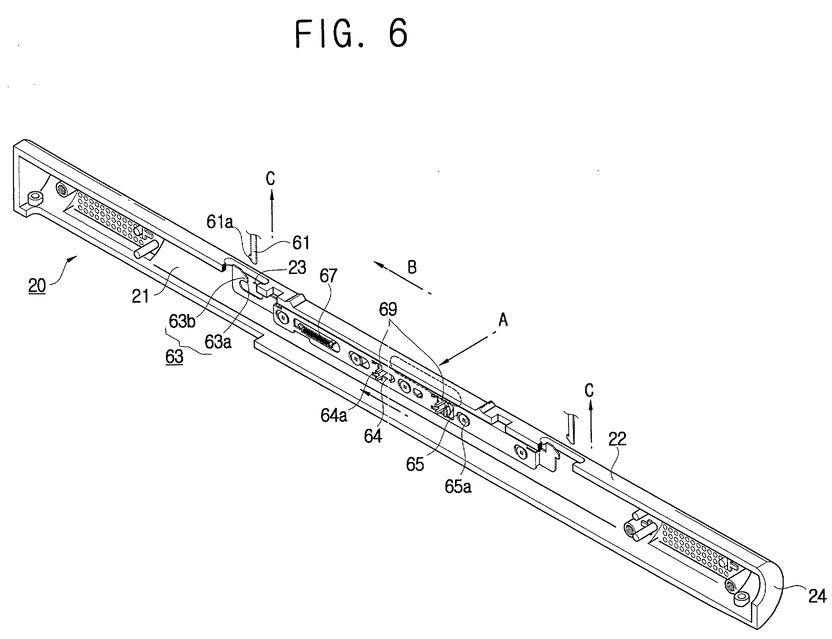

A process of opening up the LCD assembly 50 will now be described with reference to Figures 5 and 6. The LCD assembly 50 is shown locked onto the main body 10 in Figure 5.

Referring also to Figure 6, as the push button part 68 is pressed in a direction indicated by an arrow **A**, the guiding parts 69a are inserted into the through holes 64, being guided by contacting with the contact parts 64a, so that the movable hook part 62 is moved to the release position in a direction indicated by an arrow **B**.

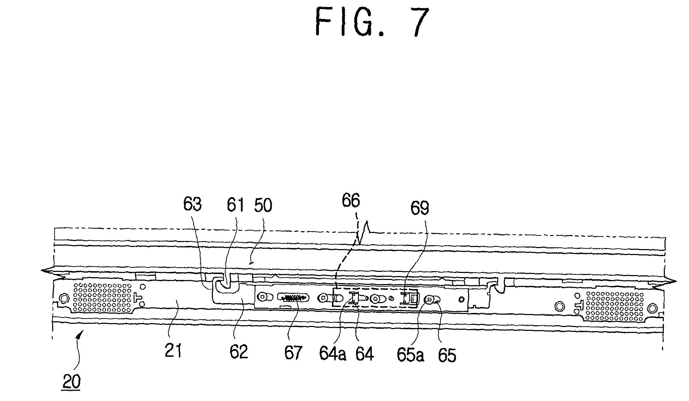

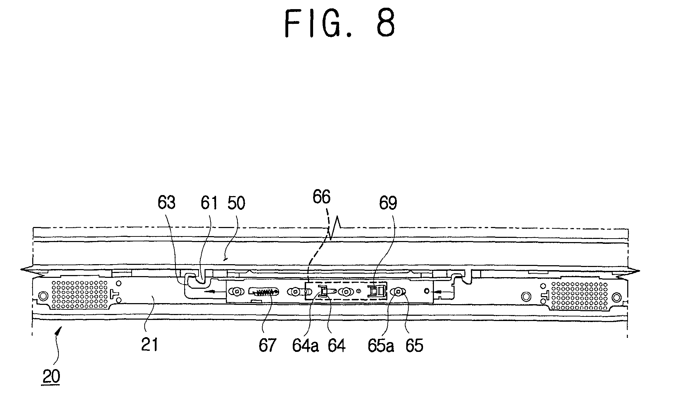

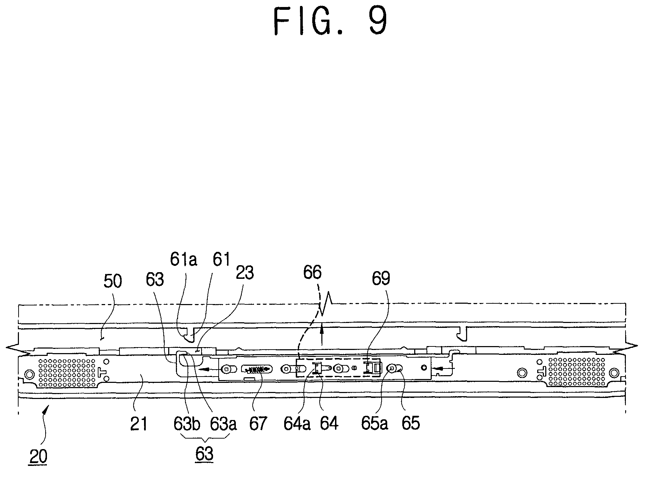

Simultaneously, the pair of movable hooks 63, each positioned under a respective one of the hook through holes 23 and cooperating with a respective one of the contact parts 64a are moved from a retaining position (Figure 7) to the releasing position (Figure 8), so that the movable hooks 63 are released from their respective hook 61a (Figure 9). Then, a user rotates a front part 50a of the LCD assembly 50 upwardly away from the main body 10 in a direction indicated by arrows **C**, releasing the fixed hooks 61 ( Figure 9), thereby opening up the portable computer 1, as shown in Figure 3.

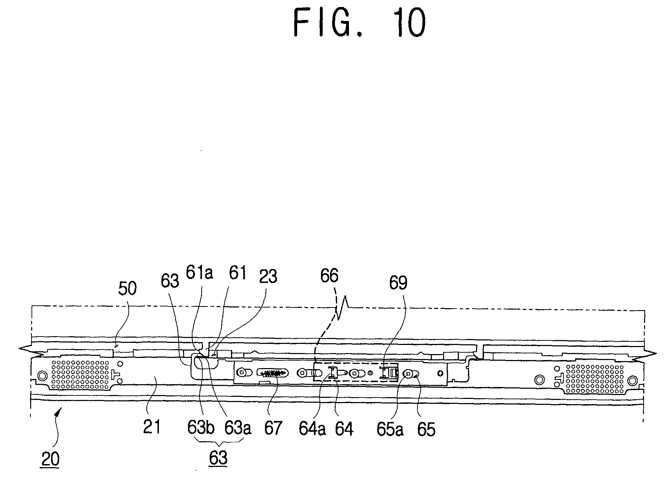

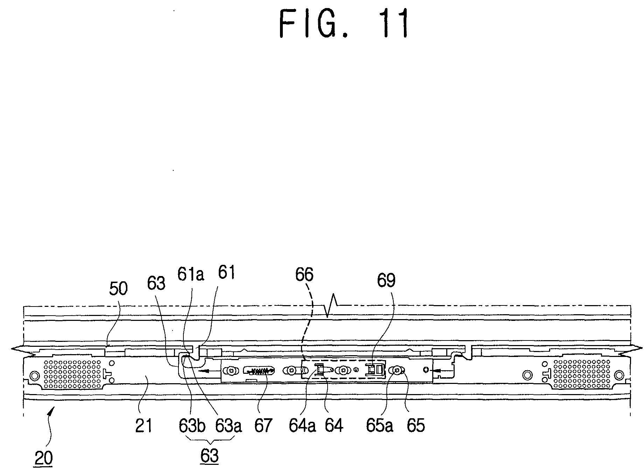

A process of locking the LCD assembly 50 onto the main body 10 follows. A user rotates the LCD assembly 50 downwardly against the main body 10,causing the fixed hooks 61 to be inserted into their respective hook through-hole 23. The fixed hooks 61 press respective inclined parts 63a of the movable hook part 62 (Figure 10), so that the movable hook part 62 is moved toward the release position as the inclined part 63a is pushed out (Figure 11).

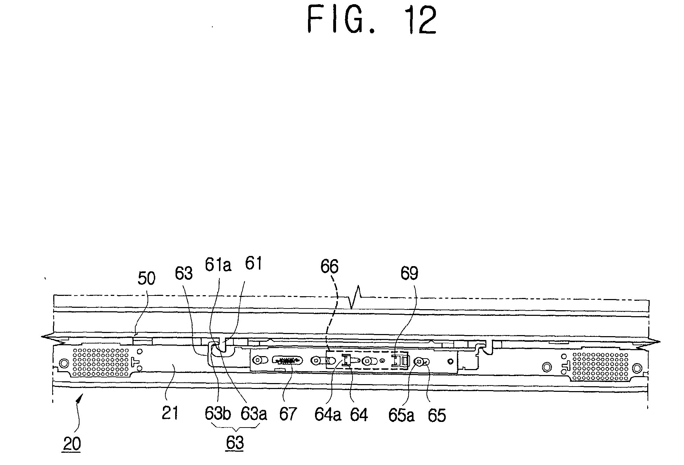

When the fixed hooks 61 have become completely inserted into respective ones of the hook through holes 23, the movable hook part 62 is restored to a locking position by the elastic member 67 and hooked to the fixed hooks 61, thereby locking the LCD assembly 50 onto the main body 10 ( Figure 12).

Thus, contrary to the conventional portable computer 101, in the portable computer 1 according to the present invention, the LCD assembly 50 is provided with the fixed hooks 61 to be hooked to and released from the movable hooks 63 of the main body 10. The main body 10 is provided with the movable hook part 62 and the knob part 66, which are employed as the latch apparatus 60, thereby providing a portable computer having latch apparatus which is convenient to handle. Further, in the portable computer 1 according to the present invention, because the movable hook part 62 and the knob part 66 are provided in the main body 10, the audio open part 56 may be provided in the LCD assembly 50, which enables some functions of the main body 10 (particularly, the audio part 30) to be controlled even where the LCD assembly 50 is locked onto the main body 10 (Figure 2).

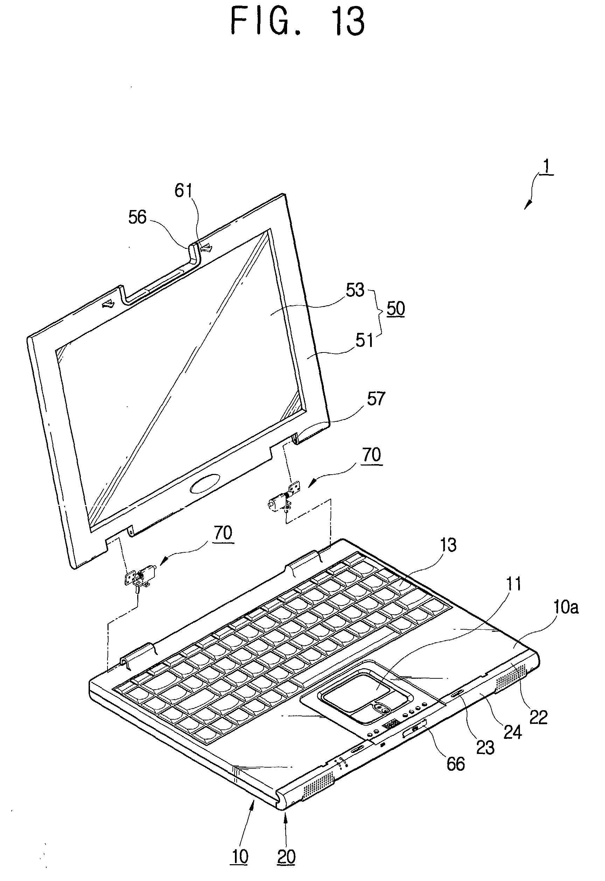

A second embodiment of the portable computer 1 of the present invention incorporates an LCD opening unit 70 as shown in Figure 13. The LCD opening unit 70 enables an operator to open/close the portable computer 1 with one hand. The opening unit 70 replaces the hinge pins 16, shown in Figure 3.

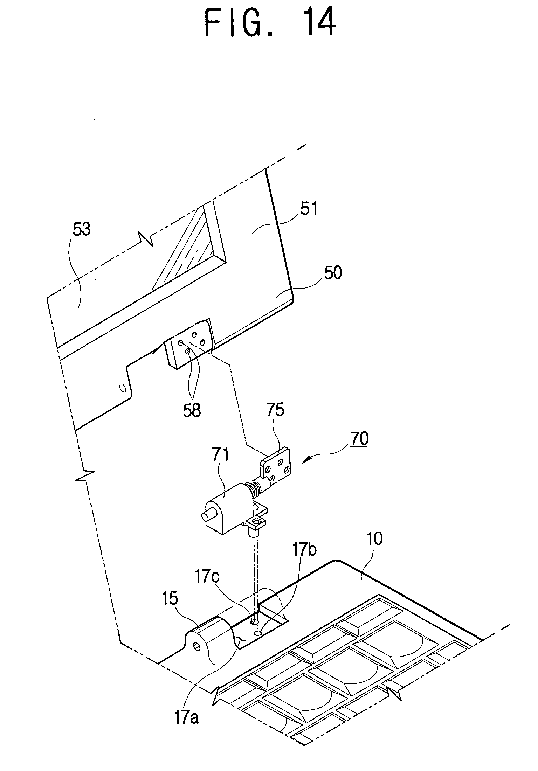

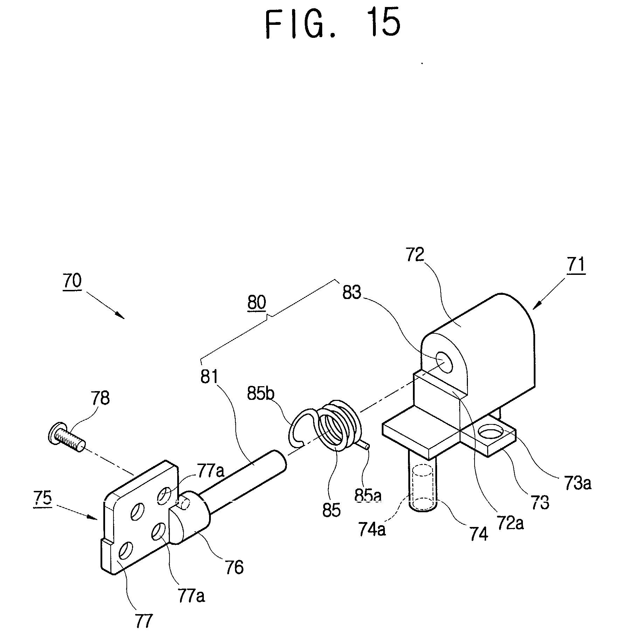

Referring now to Figures 14 and 15, the LCD opening unit 70 comprises a first supporting part 71 removably combined to the main body 10, a second supporting part 75 removably connected to the LCD assembly 50, a rotation supporting part 80 having a hinge shaft 81 extended from the second supporting part 75 and a hinge shaft accommodating part 83 which receives the hinge shaft 81 so as to allow rotation, and a torsion spring 85 coiled around the hinge shaft 81 and having first and second ends which engage the first and second supporting parts 71 and 75, respectively.

The first supporting part 71 is made of a durable material, such as steel, and comprises a main part 72 including the hinge shaft accommodating part 83, a flange part 73 protruding from the main part 72 a direction in parallel with an upper surface 17a of the main body 10, and having a coupling hole 73a therein for screw-coupling the first supporting part 71 to the main body 10, and an extended part 74 extended downwardly from the main part 72 and formed with a screw receptacle 74a therein.

The main part 72 is connected to the hinge part 15, has an inverted "U" shape cross-section, and has a bottom surface with contacts with the surface 17a. The first supporting part 71 is fastened to the main body 10 by inserting a screw (not shown) through the coupling hole 73a into a screw hole 17b formed on the surface 17a of the main body 10 and by inserting a screw (not shown) into the screw receptacle 74a of the extended part 74 from inside of the main body 10 through a screw hole 17c.

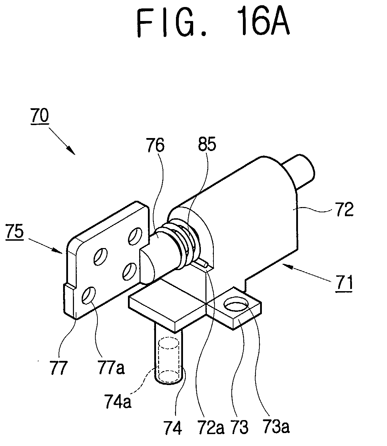

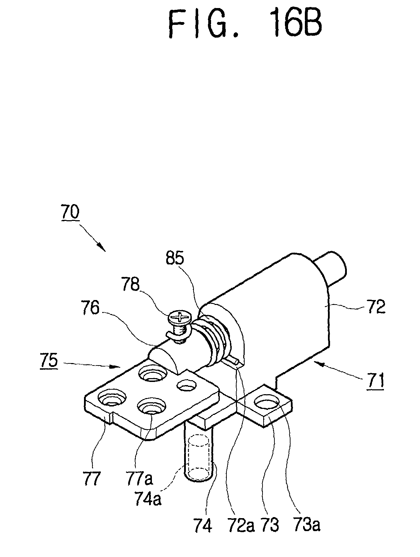

As shown in Figures 15, 16A and 16B, in one side of the main part 72 is provided a stopper or lip 72a, which prevents a first end 85a of the torsion spring 85 is from a breaking away when the latch apparatus 60 is locked.

The second supporting part 75 is also made of a durable material, such as for example, steel. The second supporting part 75 comprises: a shaft part 76 which receives the hinge shaft 81: and a bracket part 77 extending from the shaft part 76 and having a plurality of coupling holes 77a for screw-coupling the second supporting part to the LCD assembly 50 using screws (not shown) and screw holes 58 formed in the LCD assembly 50. The end of the hinge shaft 81 opposite the shaft part 76 is fitted into the hinge shaft accommodating part 83 so as to connect the second supporting part 75 with the first supporting part 71. Preferably, the hinge shaft 81 is forcibly fitted into one of the first supporting part 71 and the second supporting part 75 so that it can rotate onto one of those parts. That is, the hinge shaft 81 may be forcibly fitted to the shaft accommodating part 83 , with rotation being allowed in the shaft part 76. Alternatively, the hinge shaft 81 may be forcibly fitted to the shaft part 76, being allowed.

A suspending member , such as for example a screw 78, is removably connected onto the shaft part 76 so as to suspend the second end 85b of the torsion spring 85.

The torsion spring 85 has its second end 85b suspended on the suspending member 78 of the second supporting part 75, and its first end 85a suspended on the stopper or lip 72a of the first supporting part 71. The spring 85 exerts a torque or force on the second supporting part 75 when the latch apparatus 60 is in the locking position, so that the second supporting part 75 is elastically rotated relative to the first supporting part 71 from a first position as shown in Figure 16B to a second position as shown in Figure 16A, thus forcing the LCD assembly 50 to move from a closed position to an open position.

With the configuration shown in Figures 13 -16B, the first and second supporting parts 71 and 75 of the LCD opening unit 70 are relatively positioned as shown in Figure. 16B when the LCD assembly 50 is locked onto the main body 10, that is when the computer 1 is closed Here, the torsion spring 85 of the LCD opening unit 70 is wound so as to provide a restoring force or torque while the fixed hooks 61 are engaged with the movable hook part 62.Accordingly, as the latch apparatus 60 is released, the torsion spring 85 rotates the second supporting part 75 relative to the first supporting part 71 to the open position of the LCD assembly 50 by the restoring force of the wound torsion spring 85. Therefore, the LCD assembly 50 coupled to the second supporting part 75 is automatically opened away from the main body 10, from the locking position shown in Figure 2 to the open position shown in Figure 13. Consequently, the portable computer 1 is openable, and closable, by an operator using one hand.

In the second embodiment, the first supporting part 71 is provided with the hinge shaft accommodating part 83, and the second supporting part 75 is provided with the hinge shaft 81. Alternatively, the first supporting part may be provided with the hinge shaft part, and the second supporting part may be provided with the hinge shaft accommodating part.

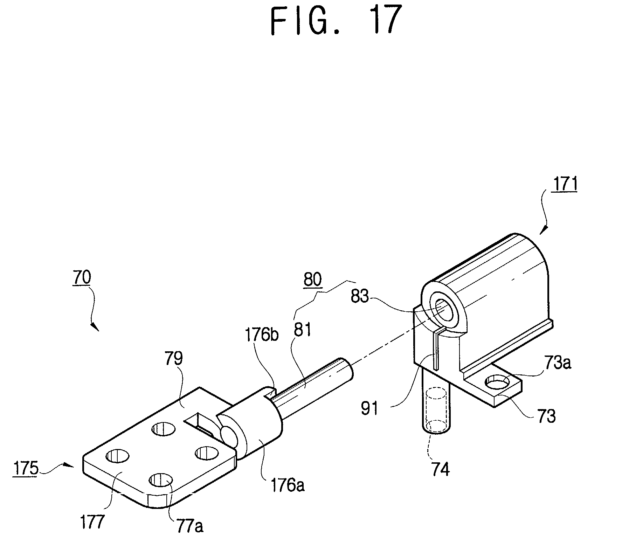

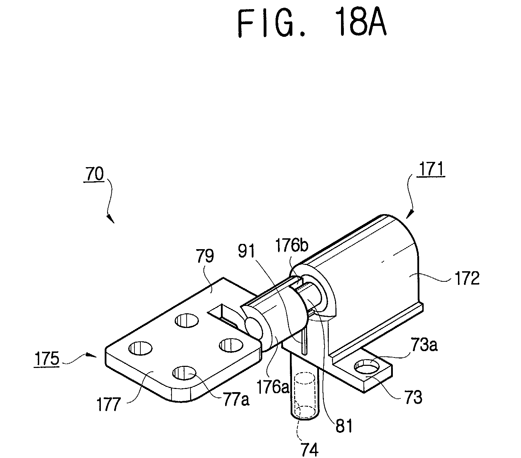

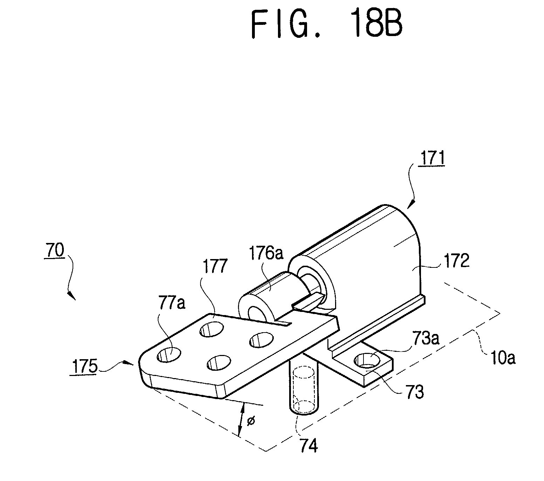

In a third embodiment, the LCD opening unit 70 is constructed as shown in FIGS. 17, 18A and 18B. In a centre area of one side of a main part 172 of a first supporting part 171, a stopper 91 is provided to restrict the maximum extent of a rotation of a shaft part 176a. A contact part 176b is provided in one side of the shaft part 176a. The contact part 176b is positioned to contact the stopper 91 of the first supporting part 171 when the LCD assembly 50 is locked to or released from the main body 10 in either direction of rotation. Thus, where the LCD assembly 50 is rotated toward the main body 10 as shown in Figure 18B, the maximum extent of rotation of the shaft part 176a is restricted by the stopper 91 and the contact part 176b. Therefore, where the LCD assembly 50 is rotated toward the main body 10, the LCD assembly 50 maintains a predetermined angle Φ with a surface 10a of the main body 10. The surface 10 is indicated by dashed lines in Figure 18B.

That is, where the LCD assembly 50 is rotated toward the main body 10, the stopper 91 of the first supporting part 171 keeps the bracket part 177 of the second supporting part 175 at the predetermined angle Φ with the main body 10, not in parallel with the surface of the main body 10, so that the portable computer 1 is not completely closed.

With the LCD assembly rotated toward the main body and the contact part 176b contacting the stopper 91, if the LCD assembly 50 is pressed downwardly, a predetermined torque T (as shown in Figure 18A) is given to a neck part 79 connected to the bracket part 77 and elastically deforms the neck part 79, so that the bracket part 77 becomes parallel to the surface 10a (Figure 13) of the main body 10, and the LCD assembly 50 becomes completely locked to the main body 10 with the latch apparatus 60.

The neck part 79 which connects the bracket part 177 with the shaft part 176a has a predetermined width and operates as a flat spring.

When the LCD assembly 50 is released from the main body 10 by operation of the latch apparatus 60 with the knob part 66 of the main body 10, the neck part 79 of the second supporting part 175 is returned to the original position by its elasticity, causing the LCD assembly 50 to be opened to at least the predetermined angle Φ from the surface of the main body 10. That is, when the LCD assembly 50 is released from the main body 10 by the latch apparatus 60 when the contact part 176b formed in the shaft part 176a of the second supporting part 175 is contacting the stopper 91 of the first supporting part 171, the bracket part 177 is rotated from the locking or closed position toward the open position because of the restoring force provided by the neck part 79 of the second supporting part 175. Therefore, the LCD assembly 50 is rotated relative to the main body 10 from the locking or closed position toward the open position. Because the neck part 79 is employed as the flat spring, the LCD assembly 50 is automatically opened at a predetermined angle of at least Φ relative to the main body 10.

In the second embodiment, the LCD opening unit 70 includes the first supporting part 71, the second supporting part 75, the rotation supporting part 80, and the torsion spring 85. In the third embodiment, the LCD opening unit 70 includes the first supporting part 171, the rotation supporting part 80 and the torsion neck (neck part) 79.

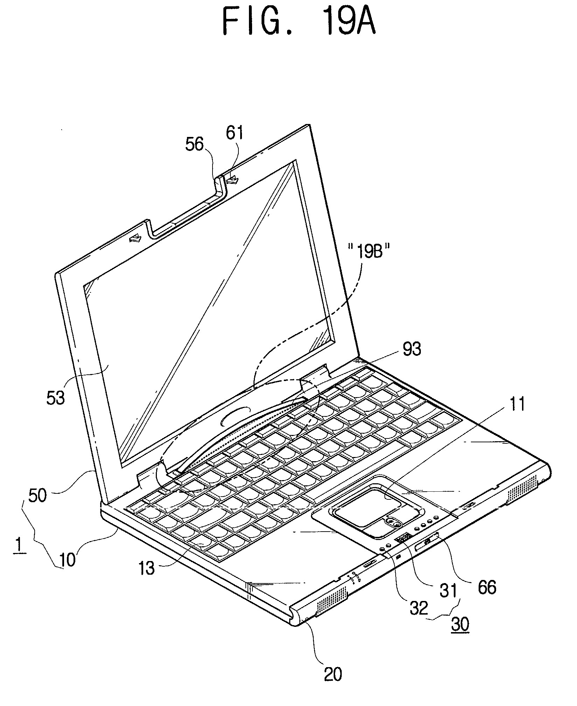

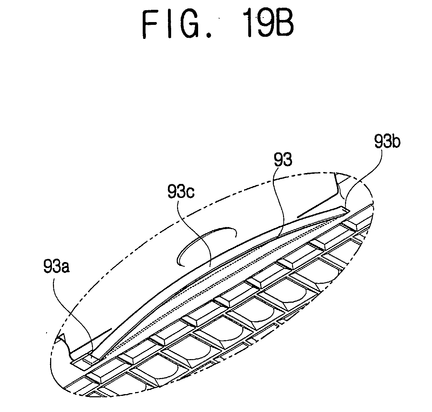

In a fourth embodiment of the present invention, shown in Figure 19, a flat spring 93 has first and second ends 93a, 93b, each fastened to the main body 10, and a middle part 93c upwardly curved and selectively contactable with the LCD assembly 50.

In a fourth embodiment of the present invention, shown in Figure 19, a flat spring 93 has first and second ends 93a, 93b, each fastened to the main body 10, and a middle part 93c upwardly curved and selectively contactable with the LCD assembly 50.

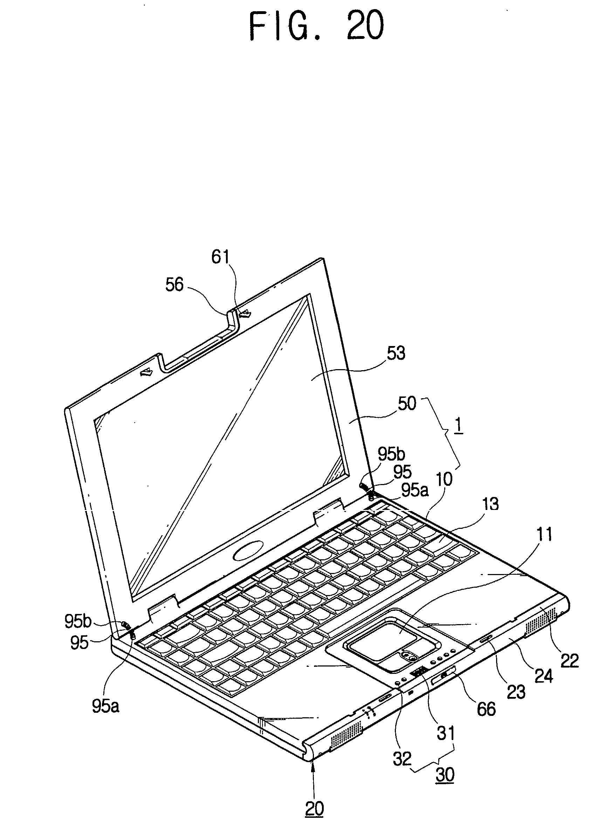

In a fifth embodiment of the present invention, shown in Figure 20, a pair of compression springs 95 each have first and second ends, 95a, 95b, coupled one to the main body 10 and one to the LCD assembly 50, to aid in opening the portable computer 1.

As described above, the embodiments provide a portable computer having a latch apparatus, which is convenient to operate, and a portable computer which is adapted to be opened/closed with one hand.

## Claims

1. A portable computer (1) comprising:
a main body (10);
a display assembly (50) hinged to the main body; and
a latch apparatus (60) arranged to alter the display assembly to be locked to and released from the main body,
the latch apparatus including a support latch part (61) provided on the display assembly, a movable latch part (62) provided with the main body and moveable between a locking position at which the movable latch part is latched to the support latch part and a release position at which the movable latch part is released from the support latch part, and a push button part (66) having a projection arranged to force the movable latch part to move to the release position when the push button is depressed.

2. The portable computer according to claim 1, wherein the support latch part includes a pair of support latch parts spaced from each other.

3. The portable computer according to claim 1 or claim 2, wherein the main body is formed with at least one through-hole (23) arranged to allow the or each support latch part to pass therethrough, and
the or each movable latch part is positioned adjacent to a latch through-hole.

4. The portable computer according to any preceding claim, wherein the or each movable latch part is formed with an inclined part (63a) for guiding the support latch part.

5. The portable computer according to any preceding claim, wherein a projection (69a) is arranged to contact an edge of an aperture (64) formed in the movable latch part, thereby to move the movable latch part when the push button part is depressed.

6. The portable computer according to any preceding claim, wherein the latch apparatus includes an elastic member (67) arranged to move the moveable latch member into the locking position.

7. The portable computer according to any preceding claim , further comprising a display opening unit (70; 175; 79b) provided between the main body and the display assembly and arranged to open elastically the display assembly against the main body when the latch apparatus is released.

8. The portable computer according to claim 7, wherein the LCD opening unit includes a flat spring having first and second ends each fastened to the main body, and a middle part upwardly curved and selectively contacted with the display assembly.

9. The portable computer according to claim 7, wherein the LCD opening unit includes at least one compression spring having first and second ends coupled to respective ones of the main body and the display assembly.

10. The portable computer according to claim 7, wherein the LCD opening unit includes:
a first supporting part (75) coupled to one of the main body and the display assembly;
a second supporting part (71) coupled to the other of the main body and the display assembly;
a rotation supporting part having a hinge shaft (81) extending from the first supporting part into a hinge shaft accommodating part (83) on the second supporting part, and
a torsion spring (85b) surrounding the hinge shaft, and having first and second ends suspended on respective ones of the first and second supporting parts.

11. The portable computer according to claim 10, further comprising a stopper (72a) provided in one of the first and second supporting parts, and suspending one end of the torsion spring, and a suspending member (78) removably connected to the other of the first and second supporting parts, and suspending the other end of the torsion spring.

12. The portable computer according to claim 7, wherein the LCD opening unit includes:
a first supporting part (171) coupled to one of the main body and the display assembly;
a second supporting part (175) coupled to the other of the main body and display assembly;
a rotation supporting part having a hinge shaft (81) extended from the first supporting part into a hinge shaft accommodating part on the second supporting part, and
a neck part (79) connecting the first and second supporting parts, and arranged to be deformed as the display assembly is closed onto the main body.

13. The portable computer according to claim 12, wherein the hinge shaft accommodating part is provided with a stopper (91) arranged to restrict rotation of the hinge shaft to a predetermined extent, and the neck part is provided with a suspending part (176b) being suspended on the stopper.

14. A portable computer as claimed in claim 8, in which the opening unit includes a first supporting part (175) coupled to one of the main body and the display assembly;
a second supporting part coupled to the other of the main body and the display assembly;
a rotation supporting part (171) having a hinge shaft extending from the first supporting part into a hinge shaft accommodating part on the second supporting part, and
a neck deformable part (79) connecting the two supporting parts.

15. The portable computer according to claim 14, wherein the hinge shaft accommodating part is provided with a stopper arranged to restrict rotation of the hinge shaft to a predetermined extent.

16. The portable computer according to claim 15, wherein the stopper apparatus comprises:
a stopper affixed to the first supporting part; and
a contact part affixed to the bracket and which rotates with or relative to the hinged shaft.

17. The portable computer as claimed in any of claims 1 to 15, in which the direction of movement of the push button is generally transverse to the direction of movement of the moveable latch part.

18. A portable computer (1) comprising:
a main body (10);
an display assembly (50) hinged to the main body;
a latch apparatus (60) for allowing the display assembly to be locked to and released from the main body; and
an opening unit (19b; 79; 70) arranged to apply a force to move the display assembly away from the main body when the display assembly is released therefrom.

19. A portable computer (1) comprising:
a main body (10) having a first surface, the first surface having first and second areas,
the first area (30) including controls for controlling the reproduction of sound by the portable computer, and an display assembly (50) hinged to the main body and
rotatable between a closed position and an open position, the display assembly being arranged such as to cover the second area but not the first area when the display assembly is in closed position.

20. The portable computer according to claim 7, wherein the LCD opening unit comprises a torsion member having a first end coupled to the main body and a second end coupled to the main body.

21. . A portable computer comprising:
a main body;
an LCD assembly rotatably combined to the main body; and
a latch apparatus which allows the LCD assembly to be locked to and released from the main body, the latch apparatus comprising:
a support hook part provided in the LCD assembly,
a movable hook part provided in the main body and moving between a locking position at which the movable hook part is hooked to the support hook part and a releasing position at which the movable hook part is released from the support hook part, and a knob part having a push button part exposed to the outside of the main body and a projection part extended from the push button part and moving the movable hook part to the releasing position by cooperating with a through hole of the movable hook part.

22. The portable computer according to claim 21, wherein the support hook part forms a pair at a free end of the LCD assembly, being spaced each other at a predetermined distance.

23. The portable computer according to claim 22, wherein on the main body is formed a pair of hook through holes for passing the support hook parts therethrough, and
the movable hook part is positioned adjacent to the hook through hole.

24. The portable computer according to claim 23, wherein the movable hook part is formed with an inclined part for guiding the support hook part.

25. The portable computer according to claim 21, wherein at one side part of the projection part is provided a guiding part for guiding the movable hook part by contacting with a contact part formed in the through hole according to an operation of the knob part.

26. The portable computer according to claim 21, wherein the knob part is further comprised of an elastic member having a first end supported by the main body and a second end coupled to the movable hook part, and restoring the movable hook part from the releasing position to the locking position.

27. The portable computer according to claim 21, further comprising an LCD opening unit provided between the main body and the LCD assembly and elastically opening the LCD assembly against the main body when the support hook part is released from the movable hook part according to an operation of the knob part.

28. The portable computer according to claim 27, wherein the LCD opening unit includes a flat spring having first and second ends each fastened to the main body, and a middle part upwardly curved and selectively contacted with the LCD assembly.

29. The portable computer according to claim 27, wherein the LCD opening unit includes a compression spring having first and second ends coupled to the main body and the LCD assembly, respectively.

30. The portable computer according to claim 27, wherein the LCD opening unit includes:
a first supporting part coupled to the main body;
a second supporting part coupled to the LCD assembly;
a rotation supporting part having a hinge shaft extended from one of the first and second supporting parts toward the other one, and a hinge shaft accommodating part provided at the other one and accommodating the hinge shaft; and
a torsion spring surrounding the hinge shaft, and having first and second ends each suspended on the first and second supporting parts.

31. The portable computer according to claim 30, further comprising a stopper provided in the first supporting part, and suspending one end of the torsion spring, and
a suspending member removably combined to the second supporting part, and suspending the other end of the torsion spring.

32. The portable computer according to claim 27, wherein the LCD opening unit includes:
a first supporting part coupled to the main body;
a second supporting part coupled to the LCD assembly;
a rotation supporting part having a hinge shaft extended from the first supporting part toward the second supporting part, and a hinge shaft accommodating part provided at the second supporting part and accommodating the hinge shaft; and
a neck part connecting the first supporting part and the hinge shaft, and deformed and restored according as the LCD assembly is locked to and released from the main body.

33. The portable computer according to claim 32, wherein the hinge shaft accommodating part is provided with a stopper restricting rotation angle of the hinge shaft, and the neck part is provided with a suspending part being suspended on the stopper.

34. The portable computer according to claim 32, wherein the first and second supporting parts are each screw-coupled with the main body and the LCD assembly, respectively.

35. The portable computer according to claim 34, wherein the first and second supporting parts are each screw-coupled with the main body and the LCD assembly, respectively.

36. The portable computer according to claim 32, wherein the hinge shaft is forcibly fitted to the hinge shaft accommodating part.

37. The portable computer according to claim 32, wherein the hinge shaft is forcibly fitted to the hinge shaft accommodating part.

38. A portable computer comprising:
a main body;
an LCD assembly rotatably combined to the main body; and
a latch apparatus for allowing the LCD assembly to be locked to and released from the main body;
an LCD opening unit elastically rotating the LCD assembly against the main body when the LCD assembly is released from the main body,
the LCD opening unit including:
a first supporting part coupled to the main body;
a second supporting part coupled to the LCD assembly;
a rotation supporting part having a hinge shaft extended from the first supporting part toward the second supporting part, and a hinge shaft accommodating part provided at the second supporting part and accommodating the hinge shaft; and
a neck part connecting the first supporting part and the hinge shaft, and deformed and restored according as the LCD assembly is locked to and released from the main body.

39. The portable computer according to claim 38, wherein the hinge shaft accommodating part is provided with a stopper restricting rotation angle of the hinge shaft, and the neck part is provided with a suspending part being suspended on the stopper.

40. The portable computer according to claim 38, wherein the first and second supporting parts are each screw-coupled with the main body and the LCD assembly, respectively.

41. The portable computer according to claim 38, wherein the hinge shaft is forcibly fitted to the hinge shaft accommodating part.

42. The portable computer according to claim 40, wherein the stopper apparatus comprises:
a stopper affixed to the first supporting part; and
a contact part affixed to the bracket and which rotates with the hinge shaft.

43. The portable computer according to claim 40, wherein the stopper apparatus comprises:
a stopper affixed to the first supporting part; and
a contact part affixed to the bracket and which rotates relative to the hinge shaft.

44. A portable computer comprising:
a main body having a first surface, the first surface having the first and second areas;
an audio control which controls a reproduction of sound by the portable computer, the audio control mounted on the first surface and in the first area; and
an LCD assembly combined to the main body and rotatable between a closed position and an open position, the LCD assembly adapted to cover the second area and to provide operator access to the first area so that the audio control is operated by a user where the LCD assembly is in the closed position.

45. The portable computer according to claim 28, wherein the LCD opening unit comprises a torsion member having a first end coupled to the main body and a second end coupled to the main body.

46. The portable computer according to claim 28, further comprising:
a plurality of LCD opening units, wherein each LCD opening unit comprises a compression spring provided between the main body and the LCD assembly.

47. A portable computer comprising:
a main body further comprising an input unit and a central processing unit;
an LCD assembly;
an LCD opening unit which rotatably combines the LCD assembly with the main body; and
a fixed hook attached to the LCD assembly and which projects toward the main body as the LCD assembly is rotatably closed onto the main body;
a movable hook part provided in the main body and which moves in a first direction transverse to a movement of the fixed hook as the LCD assembly is closed onto the main body, the movable hook part having an aperture; and
a button which moves in a second direction transverse to the first direction and which engages the aperture to move the movable hook part in the first direction.

48. The portable computer according to claim 47, wherein the LCD opening unit comprises:
a first supporting part attached to the main body;
a second supporting part attached to the LCD assembly;
a shaft which couples the second supporting part for rotation relative to the first supporting part; and
a stopper apparatus which stops rotation of the shaft to limit a closure of the LCD assembly onto the main body at a predetermined angle;
wherein the second supporting part comprises:
a bracket,
a member which couples the bracket and the shaft and which elastically deforms as the LCD assembly is rotated from the predetermined angle onto the main body.

49. The portable computer according to claim 47, wherein the LCD opening unit comprises:
a first supporting part attached to the main body;
a second supporting part attached to the LCD assembly;
a shaft which couples the second supporting part for rotation relative to the first supporting part;
a torsion spring having first and second ends and which is operative between the first and second supporting parts; and
a stopper apparatus which engages one of the first and second ends of the torsion spring at a predetermined angle as the LCD assembly is rotated toward the main body, wherein the torsion spring elastically deforms as the LCD assembly is rotated from the predetermined angled onto the main body.
